# EUROPÄISCHE PATENTSCHRIFT

(11) **EP 3 426 433 B1**
(45) Veröffentlichungstag und Bekanntmachung des Hinweises auf die Patenterteilung: **06.05.2020**
(21) Anmeldenummer: 17708705.3
(22) Anmeldetag: 20.02.2017
(51) Int. Cl.: B23P 19/04, B25B 27/00, B62D 65/06, B60J 10/00

(54) **AUSRICHTUNG UND APPLIZIERUNG EINER TÜRDICHTUNG EINES KRAFTFAHRZEUGS**
ALIGNMENT AND APPLICATION OF A DOOR SEAL OF A MOTOR VEHICLE
ORIENTATION ET APPLICATION D'UN JOINT DE PORTE DE VÉHICULE AUTOMOBILE

(30) Priorität: 09.03.2016 DE 102016203842
(43) Veröffentlichungstag der Anmeldung: 16.01.2019
(73) Patentinhaber: Bayerische Motoren Werke Aktiengesellschaft, 80809 München (DE)
(72) Erfinder: BRÜCKL, Thomas, 93107 Thalmassing (DE); LANGGAERTNER, Lukas, 80802 München (DE)
(86) Internationale Anmeldenummer: PCT/EP2017/053760
(87) Internationale Veröffentlichungsnummer: WO 2017/153154

(56) Entgegenhaltungen:
- EP-A1- 2 283 964
- WO-A1-03/018250
- WO-A1-2011/134994
- DE-A1- 10 138 141
- DE-A1-102010 051 844

## Beschreibung

Die vorliegende Erfindung betrifft eine Vorrichtung zum Ausrichten einer Türdichtung beim Applizieren der Türdichtung an eine Tür eines Kraftfahrzeugs gemäß dem Oberbegriff des Anspruchs 1 und ein System zum Applizieren einer Türdichtung an eine Tür eines Kraftfahrzeugs. Ferner betrifft die Erfindung ein Verfahren zum Applizieren einer Türdichtung an eine Tür eines Kraftfahrzeugs.

Türen von Kraftfahrzeugen weisen i.d.R. eine umlaufende Türdichtung auf, um die geschlossene Tür gegen eine Karosserie des Kraftfahrzeugs abzudichten. Derartige Türdichtungen erfüllen dabei mehrere technische Funktionen, wie z.B. Verhindern des Eindringens von Wasser in einen Innenraum des Kraftfahrzeugs, Abdämpfen eines Impulses beim Schließen der Tür, Verhindern eines direkten Kontakts der Tür mit der Karosserie, insbesondere zur Vermeidung eines Klapperns der Tür, oder dergleichen. Bekannte Türdichtungen weisen beispielsweise einen schlauchförmigen Dichtungskörper aus Gummi oder einem vergleichbaren, elastischen Material mit einer inneren Kavität auf. Zum Befestigen des Dichtungskörpers an der Tür weisen die Dichtungskörper oftmals einen Klebestreifen auf, der von einem Schutzstreifen, der vor bzw. während der Montage entfernt werden muss, nach außen geschützt ist, um somit z.B. ein ungewolltes Anheften von Objekten am Klebestreifen bzw. des Klebestreifens an Objekten zu verhindern.

Zur Sicherstellung, dass die Türdichtung die zu realisierenden technischen Funktionen optimal erfüllt, ist eine sehr präzise Anordnung der Türdichtung an einer vorbestimmten Position an der Tür erforderlich. Schon geringfügige Abweichungen der Türdichtung von der vorbestimmten Position, um etwa einen Millimeter bzw. um wenige Millimeter, können bereits dazu führen, dass eine Abdichtung wasserdurchlässig oder ein Komfort beim Schließen bzw. Öffnen der Tür aufgrund undefinierter Kräfte zwischen Karosserie und Tür negativ beeinträchtigt ist.

Zum Anordnen von Türdichtungen an Türen ist eine Vielzahl unterschiedlicher Vorrichtungen und Verfahren bekannt. Nach einem ersten bekannten Verfahren wird eine etwa 5mm starke Schablone aus einem relativ flexiblen bzw. labilen Material, z.B. aus einem Kunststoff, an einer an einem Hängeförderer hängend gehaltenen Tür angeordnet und fixiert, z.B. durch Verklemmen, Verspannen oder mittels Saugelementen. Entlang einer Randkante der Schablone ist die Türdichtung manuell ausrichtbar und nach Entfernen des Schutzstreifens durch Anpressen an der Tür montierbar. Dieses erste Verfahren hat den Nachteil, dass die Schablone sich leicht verwinden kann und ein genaues Applizieren der Türdichtung somit nicht gewährleistet ist. Ferner sind eine Oberseite und Unterseite der Tür nur schwer zugänglich bzw. einsehbar, so dass in diesen Bereichen eine korrekte Applizierung der Türdichtung nur schwer möglich ist. Ein weiterer Nachteil ist, dass eine geometrische Änderung der Schablone nur schwer möglich ist.

Nach einem zweiten Verfahren wird ein geschlossener Dichtungsring auf Spannelemente, die z.B. als Kunststoffstecker ausgebildet sind, einer Applizierplatte gesteckt. Durch ein Bewegen der Spannelemente voneinander weg wird der Dichtungsring gedehnt und eine vom Dichtungsring eingeschlossene Fläche somit vergrößert. Anschließend wird die Applizierplatte an einer Tür angeordnet, z.B. mit Hilfe von Zentrierstiften. Die Spannelemente werden wieder aufeinander zu bewegt, so dass sich der Dichtungsring auf die Tür absetzt. Dieses zweite Verfahren hat den Nachteil, dass zur Durchführung hierfür erforderliche Vorrichtungen hohe Investitionskosten verursachen und die Durchführung im Verhältnis einer Roboterapplikation einen hohen Personalaufwand erfordert. Überdies ist eine Ausrichtung der Türdichtung zur Tür während der Applizierung nur schlecht kontrollierbar, so dass eine Positioniergenauigkeit des zweiten Verfahrens bei besonders hohen Anforderungen an eine genaue Positionierung der Türdichtung oftmals nicht ausreicht. Schließlich können nur geschlossene Dichtungsringe appliziert werden.

Gemäß einem dritten Verfahren wird die Tür von einem Roboter an einen Applizierkopf zum Applizieren der auf einer Rolle aufgespulten strangförmigen Türdichtung herangeführt. Der Applizierkopf setzt die Türdichtung an der Tür an, während der Roboter die Tür am Applizierkopf zur Applizierung der Türdichtung dreht. Das dritte Verfahren hat insbesondere den Nachteil, dass der zur Durchführung erforderliche Roboter besonders hohe Investitionskosten verursacht. Ferner ist aus der DE 10 2010 051 844 A1 eine Vorrichtung zum Applizieren einer Dichtung an einem Werkstück bekannt. Diese Schrift offenbart die Merkmale des Oberbegriffs des Anspruchs 1.

Es ist daher die Aufgabe der vorliegenden Erfindung, die voranstehend beschriebenen Nachteile bei einer Vorrichtung, einem System sowie einem Verfahren beim Applizieren einer Türdichtung an eine Tür eines Kraftfahrzeugs zu beheben bzw. zumindest teilweise zu beheben. Insbesondere ist es die Aufgabe der vorliegenden Erfindung, eine Vorrichtung zum Ausrichten einer Türdichtung beim Applizieren der Türdichtung an eine Tür eines Kraftfahrzeugs sowie ein System und ein Verfahren zum Applizieren einer Türdichtung an eine Tür eines Kraftfahrzeugs bereitzustellen, die auf eine einfache sowie kostengünstige Art und Weise eine zuverlässige sowie präzise Ausrichtung der Türdichtung zur Tür beim Applizieren auch in der Massenfertigung sicherstellen.

Voranstehende Aufgabe wird durch die Patentansprüche gelöst. Demnach wird die Aufgabe durch eine Vorrichtung mit den Merkmalen des Anspruchs 1, ein System mit den Merkmalen des Anspruchs 9 sowie durch ein Verfahren mit den Merkmalen des Anspruchs 12 und ein Verfahren mit den Merkmalen des Anspruchs 13 gelöst. Weitere Merkmale und Details der Erfindung ergeben sich aus den Unteransprüchen, der Beschreibung und den Zeichnungen. Dabei gelten Merkmale und Details, die im Zusammenhang mit der Vorrichtung zum Ausrichten einer Türdichtung beim Applizieren der Türdichtung an eine Tür eines Kraftfahrzeugs beschrieben sind, selbstverständlich auch im Zusammenhang mit dem erfindungsgemäßen System sowie den erfindungsgemäßen Verfahren zum Applizieren einer Türdichtung an eine Tür eines Kraftfahrzeugs und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch eine Vorrichtung zum Ausrichten einer Türdichtung beim Applizieren der Türdichtung an eine Tür eines Kraftfahrzeugs gelöst. Die Vorrichtung weist eine Aufnahmevorrichtung zur definierten Aufnahme der Tür, eine an der Aufnahmevorrichtung angeordnete Haltevorrichtung zum Halten der Tür, eine an der Aufnahmevorrichtung angeordnete Führungsvorrichtung mit einer Führungsbahn zum Ausrichten der Türdichtung relativ zur Tür beim Applizieren der Türdichtung an die Tür und eine Rotationsvorrichtung zum Drehen der Aufnahmevorrichtung um mindestens eine Rotationsachse auf.

Die Vorrichtung ist zum Ausrichten der Türdichtung an die Tür des Kraftfahrzeugs vor bzw. während eines Appliziervorgangs der Türdichtung an der Tür ausgebildet. Hierfür weist die Vorrichtung eine Aufnahmevorrichtung auf, die zur definierten Aufnahme der Tür ausgebildet ist. Eine definierte Aufnahme ist im Sinne der Erfindung eine Aufnahme bei der die aufgenommene Tür eine definierte relative Lage zur Aufnahmevorrichtung aufweist. Die Aufnahmevorrichtung weist beispielsweise einen Grundkörper auf, an dem die Haltevorrichtung, Führungsvorrichtung und Rotationsvorrichtung angeordnet sind. Erfindungsgemäß kann vorgesehen sein, dass die Haltevorrichtung direkt an der Aufnahmevorrichtung oder über die Führungsvorrichtung an der Aufnahmevorrichtung angeordnet ist.

Die Haltevorrichtung ist zum temporären Halten der Tür ausgebildet. Die Tür ist somit für den Appliziervorgang von der Haltevorrichtung fixierbar und nach dem Appliziervorgang von dieser wieder freigebbar. Die Führungsvorrichtung weist eine Führungsbahn auf, die eine definierte Lage der Türdichtung zur Tür festlegt. Die Türdichtung ist demnach entlang der Führungsbahn ausrichtbar und somit leicht korrekt zur Tür ausrichtbar. Dabei ist die Führungsbahn erfindungsgemäß derart ausgebildet, einen seitlichen Anschlag für die Türdichtung bereitzustellen. Hierdurch wird eine Ausrichtung der Türdichtung an der Führungsbahn und somit an der Tür erleichtert, da die Türdichtung hierfür einfach mit dem seitlichen Anschlag zur Anlage gebracht werden muss. Die Führungsvorrichtung oder zumindest die Führungsbahn ist vorzugsweise weiß, oder weist zumindest eine helle Farbe auf, da Türdichtungen i.d.R. schwarz sind und somit ein besonders guter Kontrast zur Türdichtung bereitgestellt wird. Somit wird ein korrektes Anordnen der Türdichtung an der Führungsbahn mit einfachen Mitteln erleichtert.

Die Rotationsvorrichtung ist zum Drehen der Aufnahmevorrichtung um mindestens eine Rotationsachse ausgebildet. Haltevorrichtung und Führungsvorrichtung sind hierbei zusammen mit der Aufnahmevorrichtung von der Rotationsvorrichtung drehbar, so dass durch dieses Drehen eine relative Lage der Haltevorrichtung und Führungsvorrichtung zur Aufnahmevorrichtung nicht verändert wird. Während des Drehens der Aufnahmevorrichtung ist die Türdichtung entlang der Führungsbahn anordenbar. Vorzugsweise ist die Rotationsvorrichtung an einem Sockel zum Aufstellen der Vorrichtung auf dem Boden angeordnet.

Mittels einer derartigen Vorrichtung ist eine Tür derart fixierbar, dass zwischen der Tür und der Führungsbahn keine Relativbewegung stattfindet bzw. stattfinden kann. Dabei ist die Führungsbahn entlang einer Bahn der Tür angeordnet, an der die Türdichtung anzuordnen ist. Ferner ist die Türdichtung mittels einer derartigen Vorrichtung leicht an der Führungsbahn der Führungsvorrichtung ausrichtbar, da die Aufnahmevorrichtung während des Anordnens der Türdichtung an der Führungsbahn mittels der Rotationsvorrichtung um die Rotationsachse drehbar ist. Wenn das Ausrichten manuell durch einen Arbeiter erfolgen soll, kann die Tür somit stets optimal zum Arbeiter ausgerichtet werden. Eine aktuelle Stelle an der Tür an der die Türdichtung anzuordnen ist, kann somit stets z.B. im direkten Sichtfeld des Arbeiters angeordnet sein. Ein blindes Anordnen der Türdichtung an der Führungsvorrichtung oder ein Anordnen über Kopf sind somit nicht erforderlich. Somit wird mittels der erfindungsgemäßen Vorrichtung auf einfache sowie kostengünstige Art und Weise eine Ausrichtung der Türdichtung zur Tür gewährleistet. Die erfindungsgemäße Vorrichtung ist besonders für das Ausrichten eines strangförmigen Dichtungsschlauchs, der z.B. von einer Rolle abspulbar ist, geeignet. Derartige Dichtungsschläuche sind kostengünstiger als ringförmige Dichtungsschläuche.

Gemäß einer bevorzugten Weiterentwicklung der Erfindung kann bei einer Vorrichtung vorgesehen sein, dass die Aufnahmevorrichtung eine Ausrichtvorrichtung zur definierten Aufnahme der Tür an der Aufnahmevorrichtung aufweist. Eine Ausrichtvorrichtung weist beispielsweise einen Zentrierstift, eine bzw. mehrere Anschlagkanten oder dergleichen auf. Somit wird ein leichtes sowie präzises Ausrichten der Tür zur Aufnahmevorrichtung und somit auch zur Führungsvorrichtung ermöglicht. Dies ist folglich zur Erzielung einer hohen Genauigkeit bei der Ausrichtung der Türdichtung von Vorteil.

Vorzugsweise weist die Haltevorrichtung einer Vorrichtung mindestens ein Halteelement auf, wobei das Halteelement als Greifelement und/oder Saugelement und/oder Klemmelement ausgebildet ist. Die Halteelemente können beispielsweise mechanisch und/oder pneumatisch und/oder hydraulisch betätigbar sein. Ein Greifelement ist beispielsweise zangenförmig sowie zum kraftschlüssigen und/oder formschlüssigen Halten der Tür ausgebildet. Ein Saugelement weist beispielsweise einen Sauger aus Gummi oder Silikon auf, der an der Tür anordenbar ist. Durch Erzeugen eines Unterdrucks ist die Tür an dem Saugelement fixierbar. Ein Klemmelement kann beispielsweise als Kniehebel ausgebildet sein, um z.B. die Tür gegen die Aufnahmevorrichtung durch Erzeugung einer Klemmkraft zu drücken und somit an der Anfnahmevorrichtung zu fixieren.

Es kann bei einer Vorrichtung vorgesehen sein, dass die Haltevorrichtung mehrere Halteelemente und die Vorrichtung eine erste Betätigungsvorrichtung aufweisen, wobei die Halteelemente über die erste Betätigungsvorrichtung gleichzeitig betätigbar sind. Mittels mehrerer Halteelemente ist eine temporäre Fixierung der Tür an der Aufnahmevorrichtung verbesserbar, insbesondere da somit Haltekräfte zum Halten der Tür besser über die Tür verteilbar sind. Ein gleichzeitiges Betätigen der Halteelemente hat den Vorteil, dass die Halteelemente gleichzeitig von einer Haltestellung in eine Freigabestellung und umgekehrt bringbar sind. Mit nur einer Betätigung ist die Tür somit an der Aufnahmevorrichtung fixierbar bzw. lösbar. Ein aufwändiges manuelles sowie sukzessives Öffnen bzw. Schließen einer Mehrzahl von Halteelementen entfällt somit.

Es ist bei einer Vorrichtung bevorzugt, dass die Führungsvorrichtung mehrere nebeneinander angeordnete Führungssegmente mit Führungsbahnsegmenten aufweist, wobei die Führungssegmente relativ zueinander ausrichtbar und/oder lösbar an der Aufnahmevorrichtung angeordnet sind. Die Führungsbahn wird somit aus mehreren Führungsbahnsegmenten gebildet. Dabei sind die Führungsbahnsegmente vorzugsweise relativ zueinander fixierbar, so dass eine unbeabsichtigte Veränderung eines Verlaufs der Führungsbahn verhindert wird. Derartige Führungssegmente sind beispielsweise separat austauschbar. Dies ist insbesondere bei beschädigten oder fehlerhaften Führungssegmenten von Vorteil, da nicht immer die komplette Führungsvorrichtung ausgetauscht werden muss. Hierdurch können Austauschaufwand sowie Austauschkosten reduziert werden.

Weiter bevorzugt ist bei einer Vorrichtung die Aufnahmevorrichtung starr ausgebildet. Eine starre Ausbildung bedeutet in diesem Zusammenhang, dass insbesondere beim Anordnen der Tür an der Aufnahmevorrichtung bzw. bei einer Aufnahmevorrichtung mit daran angeordneter Tür kein Verwinden bzw. nur ein marginales Verwinden der Aufnahmevorrichtung auftreten kann. Ein marginales Verwinden hat auf eine Appliziergenauigkeit der Türdichtung keinen wesentlichen Einfluss, so dass die technischen Funktionen der Türdichtung gewährleistet sind. Vorzugsweise ist die Aufnahmevorrichtung daher aus einem Metall hergestellt. Eine derartige Aufnahmevorrichtung hat den Vorteil, dass die Türdichtung mit einer besonders hohen Wiederholgenauigkeit an der Tür anordenbar ist, da kein größeres Verwinden der starr ausgebildeten Aufnahmevorrichtung möglich ist. Somit ist es leicht realisierbar, dass eine relative Lage einer an der Aufnahmevorrichtung angeordneten Tür zur Führungsvorrichtung einer vordefinierten relativen Lage entspricht.

Erfindungsgemäß kann bei einer Vorrichtung vorgesehen sein, dass die Rotationsvorrichtung einen Elektromotor aufweist, der über eine zweite Betätigungsvorrichtung betätigbar ist, wobei die zweite Betätigungsvorrichtung zur Fußbetätigung ausgebildet ist. Mittels eines Elektromotors ist die Aufnahmevorrichtung zur Anordnung der Türdichtung an der Führungsbahn leicht drehbar. Eine zur Fußbetätigung ausgebildete zweite Betätigungsvorrichtung kann beispielsweise als Fußpedal ausgebildet sein. Mittels einer solchen zweiten Betätigungsvorrichtung ist der Elektromotor von einem Arbeiter betätigbar, ohne dass dieser hierfür seine Hände gebrauchen muss. So kann der Arbeiter die Hände zum Anordnen der Türdichtung an der Führungsbahn besser einsetzen. Alternativ kann die Rotationsvorrichtung auch über einen pneumatischen Motor oder eine Handkurbel, ggf. mit einem Hilfsgetriebe zur leichteren Handhabung, betätigbar sein.

Vorzugsweise ist die Rotationsachse der Rotationsvorrichtung horizontal oder im Wesentlichen horizontal ausrichtbar. Die Rotationsachse verläuft vorzugsweise in etwa durch einen von der Führungsbahn umgebenen Mittelpunkt sowie rechtwinklig bzw. im Wesentlichen rechtwinklig zu einer Aufnahmeseite der Aufnahmevorrichtung zur Aufnahme der Tür. Eine derartige Rotationsachse hat den Vorteil, dass die Tür derart relativ zum Arbeiter drehbar ist, dass die Türdichtung beim Anordnen an der Führungsbahn dem Arbeiter zugewandt ist. Somit hat der Arbeiter stets einen guten Blick auf die Türdichtung und kann die Türdichtung leicht an der Führungsbahn positionieren. Die Tür ist dabei derart drehbar, dass die Türdichtung beim Anordnen senkrecht bzw. im Wesentlichen senkrecht verläuft. Dies hat den Vorteil, dass die Türdichtung beim Anordnen aufgrund der Schwerkraft keine Wellen wirft. Hierdurch ist eine Appliziergenauigkeit der Türdichtung deutlich verbesserbar.

Gemäß einem zweiten Aspekt der Erfindung wird die Aufgabe durch ein System zum Applizieren einer Türdichtung an eine Tür eines Kraftfahrzeugs gelöst. Das System weist eine erfindungsgemäße Vorrichtung gemäß dem ersten Aspekt der Erfindung sowie eine Appliziervorrichtung zum Applizieren der Türdichtung an die Tür auf. Die Appliziervorrichtung ist vorzugsweise zum gezielten Heranführen der Türdichtung, z.B. eines Türdichtungsstrangs von einer Rolle, an die Tür ausgebildet. Weiter bevorzugt ist die Appliziervorrichtung ausgebildet, die Türdichtung an vordefinierter Stelle an die Tür zu drücken. Vorzugsweise ist die Appliziervorrichtung ausgebildet, ein Schutzelement eines Klebestreifens des Türdichtungsstrangs, wie z.B. ein Schutzstreifen, eine Schutzfolie oder dergleichen, zu entfernen, z.B. abzuziehen. Weiter bevorzugt ist die Appliziervorrichtung ausgebildet, das Schutzelement des Klebestreifens nach dem Abziehen abzuführen bzw. zu entsorgen. Die erfindungsgemäße Appliziervorrichtung ist vorzugsweise ausgebildet, einen konstanten Anpressdruck des Türdichtungsstrangs an der Tür zu gewährleisten. Die Appliziervorrichtung kann erfindungsgemäß beispielsweise automatisch oder von Hand betätigbar ausgebildet sein. Bei dem beschriebenen System zum Applizieren einer Türdichtung an eine Tür eines Kraftfahrzeugs ergeben sich sämtliche Vorteile, die bereits zu einer Vorrichtung zum Ausrichten einer Türdichtung beim Applizieren der Türdichtung an eine Tür eines Kraftfahrzeugs gemäß dem ersten Aspekt der Erfindung beschrieben worden sind. Insbesondere hat das System den Vorteil, dass die Türdichtung besonders genau an der Tür anordenbar ist. Ferner ist ein Appliziervorgang mit dem System wesentlich schneller durchführbar als eine herkömmliche, manuelle bzw. manuell unterstützte Applizierung von Türdichtungen.

Gemäß einer bevorzugten Weiterbildung des erfindungsgemäßen Systems kann vorgesehen sein, dass die Appliziervorrichtung derart entlang der Führungsbahn der Führungsvorrichtung geführt ist, dass eine während des Applizierens der Türdichtung vorgegebene relative Lage der Appliziervorrichtung zu einer an der Aufnahmevorrichtung angeordneten Tür durch die Führungsvorrichtung eingestellt wird. Die Appliziervorrichtung ist somit mit der Führungsvorrichtung koppelbar, wobei die Führungsvorrichtung eine relative Lage der Appliziervorrichtung zur Aufnahmevorrichtung festlegt. Beim Bewegen der Appliziervorrichtung entlang der Führungsvorrichtung wird die Appliziervorrichtung von der Führungsvorrichtung in die jeweils entsprechende relative Lage geführt. Eine relative Lage ist durch einen Anstellwinkel der Appliziervorrichtung zur Führungsvorrichtung sowie eine Position der Appliziervorrichtung auf der Führungsbahn definiert. Eine derartige Führung hat den Vorteil, dass die Appliziervorrichtung stets eine zum Applizieren der Türdichtung optimale Lage relativ zu der an der Aufnahmevorrichtung gehaltenen Tür aufweist. Auf diese Weise kann eine besonders hohe Appliziergenauigkeit erreicht werden.

Vorzugsweise weist bei einem System die Vorrichtung eine Detektionsvorrichtung auf, die zum Detektieren eines Verlaufs einer an einer Tür angebrachten Türdichtung aufweist. Die Detektionsvorrichtung ist zum Erkennen einer Lage der Türdichtung an der Tür bzw. relativ zur Vorrichtung, insbesondere zur Führungsvorrichtung der Vorrichtung, ausgebildet. Somit sind Lageabweichungen der Türdichtung aufgrund einer fehlerhaften Applizierung von der Detektionsvorrichtung direkt beim Applizieren erfassbar. Mittels einer Auswerteeinheit des Systems können die ermittelten Abweichungen mit vorgegebenen Grenzwerten verglichen werden. Bei Überschreitung eines Grenzwerts kann das System ggf. eine Korrektur zum weiteren Applizieren der Türdichtung durchführen bzw. vorgeben und/oder eine Fehlermeldung ausgeben.

Gemäß einem dritten Aspekt der Erfindung wird die Aufgabe gelöst durch ein Verfahren zum Applizieren einer Türdichtung an eine Tür eines Kraftfahrzeugs mittels einer erfindungsgemäßen Vorrichtung, d.h. einer Vorrichtung gemäß dem ersten Aspekt der Erfindung. Das Verfahren weist die folgenden Schritte auf:
- Anordnen einer Tür an eine Aufnahmevorrichtung der Vorrichtung,
- Befestigen der Tür an der Aufnahmevorrichtung mittels mindestens eines Halteelements einer Haltevorrichtung der Vorrichtung,
- Anordnen eines Anfangs eines Dichtungsstrangs an einer durch eine Führungsvorrichtung der Vorrichtung vorgegebenen oder zumindest teilweise vorgegebenen Stelle der Tür, und
- Applizieren des Dichtungsstrangs an der Tür entlang einer von der Führungsvorrichtung vorgegebenen Führungsbahn.

Die Aufnahmevorrichtung wird während des Applizierens um eine Rotationsachse in eine Rotationsrichtung gedreht.

Beim Anordnen wird die Tür beispielsweise einer Hängefördervorrichtung entnommen und zur Aufnahmevorrichtung geführt. Über eine Ausrichtvorrichtung, wie z.B. Zentrierstifte und/oder Ausrichtanschläge, ist die Tür beim Anordnen an der Aufnahmevorrichtung relativ zu dieser leicht ausrichtbar, so dass die Tür eine definierte Lage zur Aufnahmevorrichtung aufweist. Insbesondere die Führungsvorrichtung zum Führen der Türdichtung weist nun eine definierte Lage zur Tür auf.

Um eine unbeabsichtigte Veränderung der Lage der Tür zur Aufnahmevorrichtung zu verhindern, wird die Tür mittels mindestens eines Halteelements an der Aufnahmevorrichtung gesichert.

Der Anfang des Dichtungsstrangs wird vorzugsweise an einer Unterseite der Tür angeordnet, wobei die Unterseite der Tür dabei vorzugsweise um etwa 90° um die Rotationsachse nach oben verschwenkt ist. Somit hat der Arbeiter einen freien Blick auf die Stelle der Tür an der die Türdichtung angeordnet wird.

Beim Applizieren des Dichtungsstrangs wird die Türdichtung gegen die Tür gedrückt, z.B. manuell durch einen Arbeiter, und somit vorzugsweise mittels eines Klebestreifens der Türdichtung an diese geklebt. Dabei wird die Tür um die Rotationsachse gedreht, nachfolgende Abschnitte des Dichtungsstrangs werden fortlaufend entlang der Führungsbahn ausgerichtet und an die Tür appliziert bis die Tür eine umlaufende Türdichtung aufweist. Der Anfang der Türdichtung und ein Ende der Türdichtung werden vorzugsweise auf Stoß zueinander bzw. miteinander fluchtend ausgerichtet und vorzugsweise miteinander verklebt.

Bei dem beschriebenen Verfahren gemäß dem dritten Aspekt der Erfindung ergeben sich sämtliche Vorteile, die bereits zu einer Vorrichtung zum Ausrichten einer Türdichtung beim Applizieren der Türdichtung an eine Tür eines Kraftfahrzeugs gemäß dem ersten Aspekt der Erfindung beschrieben worden sind.

Gemäß einem vierten Aspekt der Erfindung wird die Aufgabe gelöst durch ein Verfahren zum Applizieren einer Türdichtung an eine Tür eines Kraftfahrzeugs mittels eines erfindungsgemäßen Systems gemäß dem zweiten Aspekt der Erfindung. Das Verfahren weist die folgenden Schritte auf:
- Anordnen einer Tür an eine Aufnahmevorrichtung der Vorrichtung,
- Befestigen der Tür an der Aufnahmevorrichtung mittels mindestens eines Halteelements einer Haltevorrichtung der Vorrichtung,
- Anordnen eines Anfangs eines Dichtungsstrangs an einer durch eine Führungsvorrichtung der Vorrichtung vorgegebenen oder zumindest teilweise vorgegebenen Stelle der Tür, und
- Applizieren des Dichtungsstrangs an der Tür mittels der Appliziervorrichtung des Systems entlang einer von der Führungsvorrichtung vorgegebenen Führungsbahn.

Die Aufnahmevorrichtung wird während des Applizierens um eine Rotationsachse in eine Rotationsrichtung gedreht.

Das Verfahren gemäß dem vierten Aspekt der Erfindung unterscheidet sich vom Verfahren gemäß dem dritten Aspekt der Erfindung insbesondere in dem Merkmal, dass das Applizieren mittels einer Appliziervorrichtung erfolgt.

Bei dem beschriebenen Verfahren gemäß dem vierten Aspekt der Erfindung ergeben sich sämtliche Vorteile, die bereits zu einer Vorrichtung zum Ausrichten einer Türdichtung beim Applizieren der Türdichtung an eine Tür eines Kraftfahrzeugs gemäß dem ersten Aspekt der Erfindung beschrieben worden sind. Das Applizieren mittels einer Appliziervorrichtung hat den weiteren Vorteil, dass eine besonders hohe Appliziergenauigkeit sowie Appliziergeschwindigkeit erzielbar sind.

Eine erfindungsgemäße Vorrichtung zum Ausrichten einer Türdichtung beim Applizieren der Türdichtung an eine Tür eines Kraftfahrzeugs sowie ein erfindungsgemäßes System zum Applizieren einer Türdichtung an eine Tür eines Kraftfahrzeugs, werden nachfolgend anhand von Zeichnungen näher erläutert. Es zeigen jeweils schematisch:
- Figur 1: in einer Seitenansicht ein Kraftfahrzeug mit einer Türdichtung,
- Figur 2: in einer perspektivischen Darstellung eine Vorderseite einer Ausführungsform der erfindungsgemäßen Vorrichtung,
- Figur 3: in einer perspektivischen Darstellung eine Rückseite der erfindungsgemäßen Vorrichtung aus Figur 2,
- Figur 4: in einer Seitenansicht die erfindungsgemäße Vorrichtung beim Applizieren einer Türdichtung an einer Tür, und
- Figur 5: in einer Seitenansicht eine Ausführungsform des erfindungsgemäßen Systems beim Applizieren einer Türdichtung an einer Tür.

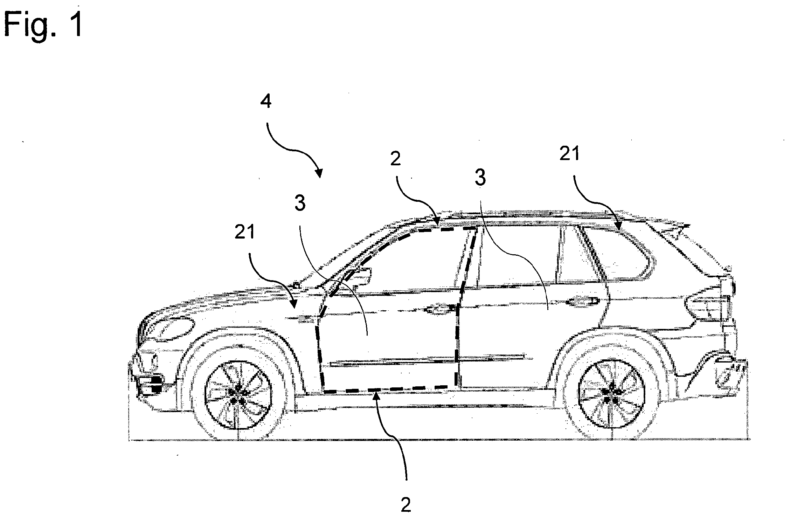

Elemente mit gleicher Funktion und Wirkungsweise sind in den Fig. 1 bis 5 jeweils mit denselben Bezugszeichen versehen.

In Fig. 1 sind schematisch ein Kraftfahrzeug 4 in einer Seitenansicht dargestellt. Das Kraftfahrzeug 4 weist vier Türen 3 mit jeweils einer umlaufenden, in dieser Ansicht von den Türen 3 verdeckten Türdichtung 2 auf. Eine Lage einer Türdichtung 2 ist durch eine gestrichelte Linie gekennzeichnet.

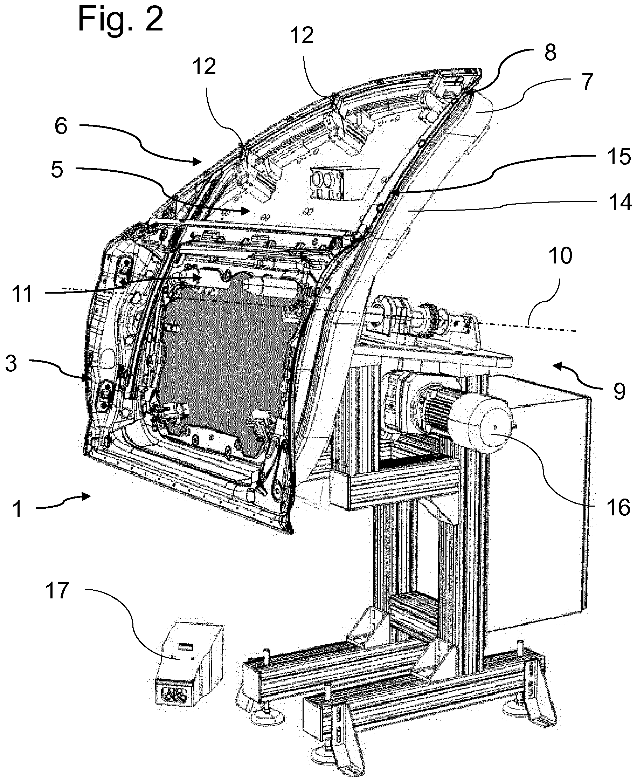

Fig. 2 zeigt schematisch eine bevorzugte Ausführungsform einer erfindungsgemäßen Vorrichtung 1 zum Ausrichten einer Türdichtung 2 in einer perspektivischen Ansicht von vorne. Die Vorrichtung 1 weist eine Aufnahmevorrichtung 5 auf, an der eine Tür 3 angeordnet ist. Die Aufnahmevorrichtung 5 ist zusammen mit der Tür 3 mittels einer Rotationsvorrichtung 9 der Vorrichtung 1 um eine im Wesentlichen horizontal verlaufende Rotationsachse 10 drehbar. Die Rotationsvorrichtung 9 weist zum Drehen der Aufnahmevorrichtung 5 einen Elektromotor 16 auf, der mittels einer als Fußpedal ausgebildeten zweiten Betätigungsvorrichtung 17 betätigbar ist.

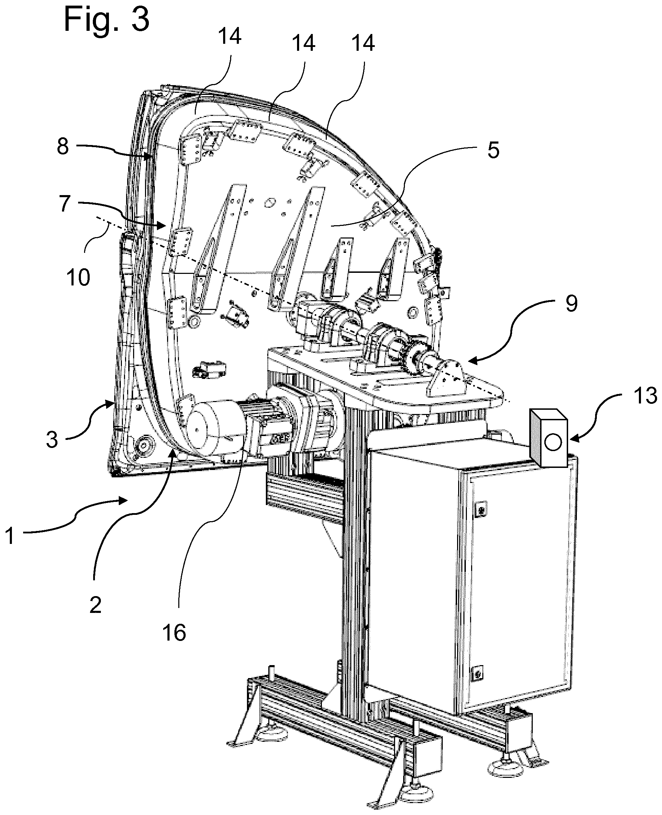

Auf einer Seite der Aufnahmevorrichtung 5 ist eine Ausrichtvorrichtung 11 angeordnet, die zwei nebeneinander angeordnete Ausrichtzapfen zum Ausrichten der Tür 3 beim Anordnen an der Aufnahmevorrichtung 5 aufweist. Ferner ist an der Aufnahmevorrichtung 5 eine Haltevorrichtung 6 mit mehreren Halteelementen 12 angeordnet, die als Klemmelemente zum Festklemmen der Tür 3 ausgebildet sind. Mittels der Haltevorrichtung 6 ist die an der Ausrichtvorrichtung 11 ausgerichtete Tür 3 an der Aufnahmevorrichtung 5 in einer vordefinierten relativen Lage zur Aufnahmevorrichtung 5 temporär fixiert. Die Halteelemente 12 sind über eine erste Betätigungsvorrichtung 13 (vgl. Fig. 3) betätigbar, vorzugsweise gleichzeitig.

An einem umlaufenden Rand der Aufnahmevorrichtung 5 sind mehrere Führungssegmente 14 mit jeweils einem Führungsbahnsegment 15 derart angeordnet und fixiert, dass die Führungssegmente 14 eine gemeinsame Führungsvorrichtung 7 mit einer umlaufenden sowie durchgängigen Führungsbahn 8 bilden. Über die Führungsbahn 8 ist ein Verlauf einer an der Tür 3 anzuordnenden Türdichtung 2 festgelegt.

In Fig. 3 ist die Vorrichtung 1 aus Fig. 2 schematisch in einer perspektivischen Ansicht von hinten. In dieser Darstellung ist ebenfalls eine Tür 3 an der Aufnahmevorrichtung 5 angeordnet und über die in dieser Perspektive nicht erkennbare Haltevorrichtung 6 bzw. über die Halteelemente 12 der Haltevorrichtung 6 (vgl. Fig. 2) an der Aufnahmevorrichtung 5 temporär fixiert. Von der Tür 3 ist nur ein Randbereich erkennbar, da der übrige Teil der Tür 3 von der Aufnahmevorrichtung 5 verdeckt ist. In dieser Ansicht ist die Führungsbahn 8 der Führungsvorrichtung 7 gut erkennbar. In einem Bereich, der von der Führungsbahn 8 und der Tür 3 definiert ist, ist die Türdichtung 2 die Tür 3 kontaktierend angeordnet und somit bereits an die Tür 3 appliziert.

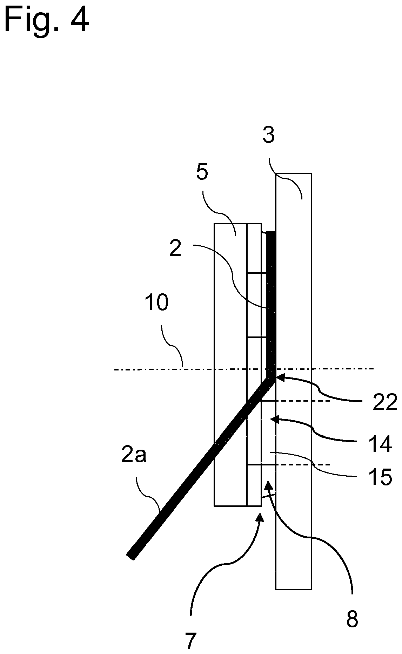

Fig. 4 zeigt eine Ausführungsform der erfindungsgemäßen Vorrichtung 1 beim Applizieren einer Türdichtung 2 an einer Tür 3, wobei einige Komponenten der besseren Übersicht halber nicht gezeigt sind. Die Tür 3 ist an der Aufnahmevorrichtung 5 gehalten, so dass durch die Führungsbahn 8 der Führungsvorrichtung 7 und der Tür 3 ein definierter Bereich zum Anordnen der Türdichtung 2 bereitgestellt ist. Zum Applizieren der Türdichtung 2 wird ein Dichtungsstrang 2a bereitgestellt, der entlang der Führungsbahn 8 an der Tür 3 anordenbar und durch Andrücken an die Tür 3 fixierbar ist, z.B. über einen Klebestreifen des Dichtungsstrangs 2a. Das Andrücken kann beispielsweise manuell durch einen Arbeiter erfolgen. Während des Anordnens der Türdichtung 2 an der Tür 3, ist die Tür 3 über die Rotationsvorrichtung 9 um die Rotationsachse 10 drehbar. Die Tür 3 ist dabei derart drehbar, dass eine Kontaktierstelle 22 an der die Führungsbahn 8 mit dem Dichtungsstrang 2a in Kontakt gerät, im Sichtfeld des Arbeiters liegt bzw. von diesem leicht, z.B. mit seinen Händen, erreichbar ist. Vorzugsweise ist die Tür 3 derart drehbar, dass die Kontaktierstelle 22 stets an einer Seite der Vorrichtung 1 angeordnet ist. In dieser Ansicht ist deutlich erkennbar, dass die Führungsvorrichtung 7 aus mehreren Führungssegmenten 14 zusammengesetzt ist.

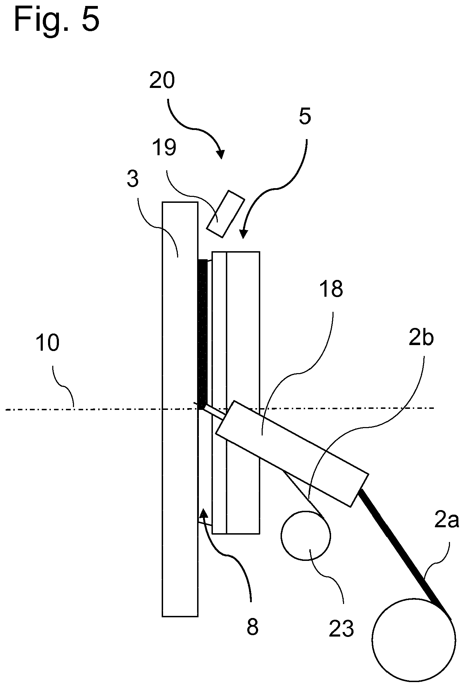

In Fig. 5 ist eine bevorzugte Ausführungsform eines erfindungsgemäßen Systems 20 beim Applizieren einer Türdichtung 2 an einer Tür 3 schematisch dargestellt, wobei einige Komponenten der besseren Übersicht halber nicht gezeigt sind. Das System 20 weist zusätzlich zu der in Fig. 4 gezeigten Vorrichtung 1 eine Appliziervorrichtung 18 zum automatischen Applizieren der Türdichtung 2 mittels des Dichtungsstrangs 2a auf. Die Appliziervorrichtung 18 ist ausgebildet, sich entlang der Führungsbahn 8 auszurichten um somit zum Anordnen der Türdichtung 2 an der Tür 3 an jeder Stelle der Tür 3 korrekt ausgerichtet zu sein. Daher ist es bei dem erfindungsgemäßen System 20 nicht erforderlich, dass die Führungsbahn 8 direkt an dem Verlauf der Türdichtung 2 an der Tür 3 angeordnet ist, da nur eine relative Lage der Appliziervorrichtung 18 zur Tür 3 durch die Führungsbahn 8 vorgegeben sein muss.

Bei dem erfindungsgemäßen System 20 kommt es beim Applizieren zumindest auf eine korrekte Ausrichtung der Appliziervorrichtung 18 zur Tür 3 während des Applizierens an. Demnach wäre erfindungsgemäß bei dem System 20 auch eine Führungsbahn 8 zum Führen der Appliziervorrichtung 18 denkbar, die von der Tür 3 beabstandet ist. Zum Andrücken des Dichtungsstreifens 2a an der Tür 3, kann das System 20, insbesondere die Appliziervorrichtung 18, beispielsweise eine nicht abgebildete Druckrolle aufweisen. An der Appliziervorrichtung 18 ist eine Sammelspule 23 zum Aufspulen eines mittels der Appliziervorrichtung 18 von dem Dichtungsstrang 2a abgezogenen Schutzstreifens 2b angeordnet. Eine Sammelspule 23 hat den Vorteil, dass der entfernte Schutzstreifen 2b somit leicht vom Dichtungsstrang 2b wegführbar ist, so dass ein unbeabsichtigtes Verkleben des Schutzstreifens zwischen der Tür und der Türdichtung 2 vermieden wird. Alternativ kann eine nicht dargestellte Ableitevorrichtung zum Ableiten des Schutzstreifens 2b, insbesondere in einen Abfallbehälter, an der Appliziervorrichtung 18 angeordnet sein.

Insbesondere zur Überprüfung einer Lage der applizierten Türdichtung 2 an der Tür 3 und/oder zum Prüfen der Türdichtung 2 auf Beschädigungen, weist das System 20 eine Detektionsvorrichtung 19 auf, die von der Appliziervorrichtung 18 beabstandet an der Führungsbahn 8 angeordnet und auf die bereits applizierte Türdichtung 2 gerichtet ist. Die Detektionsvorrichtung 19 kann beispielsweise ortsfest innerhalb des Systems 20 angeordnet sein. Vorzugsweise ist die Detektionsvorrichtung 19 derart gelagert bzw. geführt, z.B. entlang der Führungsbahn, dass die Detektionsvorrichtung 19 stets eine konstante Lage relativ zur detektierten Türdichtung 2 aufweist. Die Detektionsvorrichtung 19 kann beispielsweise optische Detektionsmittel, wie z.B. einen CCD-Sensor, aufweisen.

### Bezugszeichenliste

- 1: Vorrichtung
- 2: Türdichtung
- 2a: Dichtungsstrang
- 2b: Schutzstreifen
- 3: Tür
- 4: Kraftfahrzeug
- 5: Aufnahmevorrichtung
- 6: Haltevorrichtung
- 7: Führungsvorrichtung
- 8: Führungsbahn
- 9: Rotationsvorrichtung
- 10: Rotationsachse
- 11: Ausrichtvorrichtung
- 12: Halteelement
- 13: erste Betätigungsvorrichtung
- 14: Führungssegment
- 15: Führungsbahnsegment
- 16: Elektromotor
- 17: zweite Betätigungsvorrichtung
- 18: Appliziervorrichtung
- 19: Detektionsvorrichtung
- 20: System
- 21: Karosserie
- 22: Kontaktierstelle
- 23: Sammelspule

## Patentansprüche

1. Vorrichtung (1) zum Ausrichten einer Türdichtung (2) beim Applizieren der Türdichtung (2) an eine Tür (3) eines Kraftfahrzeugs (4), aufweisend eine Aufnahmevorrichtung (5) zur definierten Aufnahme der Tür (3), eine an der Aufnahmevorrichtung (5) angeordnete Haltevorrichtung (6) zum Halten der Tür (3), eine an der Aufnahmevorrichtung (5) angeordnete Führungsvorrichtung (7) mit einer Führungsbahn (8) zum Ausrichten der Türdichtung (2) relativ zur Tür (3) beim Applizieren der Türdichtung (2) an die Tür (3) und eine Rotationsvorrichtung (9) zum Drehen der Aufnahmevorrichtung (5) um mindestens eine Rotationsachse (10), **dadurch gekennzeichnet, dass** die Führungsbahn (8) ausgebildet ist, einen seitlichen Anschlag für die Türdichtung (2) bereitzustellen.

2. Vorrichtung (1) nach Anspruch 1,
**dadurch gekennzeichnet,**
**dass** die Aufnahmevorrichtung (5) eine Ausrichtvorrichtung (11) zur definierten Aufnahme der Tür (3) an der Aufnahmevorrichtung (5) aufweist.

3. Vorrichtung (1) nach Anspruch 1 oder 2,
**dadurch gekennzeichnet,**
**dass** die Haltevorrichtung (6) mindestens ein Halteelement (12) aufweist, wobei das Halteelement (12) als Greifelement und/oder Saugelement und/oder Klemmelement ausgebildet ist.

4. Vorrichtung (1) nach Anspruch 3,
**dadurch gekennzeichnet,**
**dass** die Haltevorrichtung (6) mehrere Halteelemente (12) und die Vorrichtung (1) eine erste Betätigungsvorrichtung (13) aufweisen, wobei die Halteelemente (12) über die erste Betätigungsvorrichtung (13) gleichzeitig betätigbar sind.

5. Vorrichtung (1) nach wenigstens einem der vorangegangenen Ansprüche,
**dadurch gekennzeichnet,**
**dass** die Führungsvorrichtung (7) mehrere nebeneinander angeordnete Führungssegmente (14) mit Führungsbahnsegmenten (15) aufweist, wobei die Führungssegmente (14) relativ zueinander ausrichtbar und/oder lösbar an der Aufnahmevorrichtung (5) angeordnet sind.

6. Vorrichtung (1) nach wenigstens einem der vorangegangenen Ansprüche,
**dadurch gekennzeichnet,**
**dass** die Aufnahmevorrichtung (5) starr ausgebildet ist.

7. Vorrichtung (1) nach wenigstens einem der vorangegangenen Ansprüche,
**dadurch gekennzeichnet,**
**dass** die Rotationsvorrichtung (9) einen Elektromotor (16) aufweist, der über eine zweite Betätigungsvorrichtung (17) betätigbar ist, wobei die zweite Betätigungsvorrichtung (17) zur Fußbetätigung ausgebildet ist.

8. Vorrichtung (1) nach wenigstens einem der vorangegangenen Ansprüche,
**dadurch gekennzeichnet,**
**dass** die Rotationsachse (10) der Rotationsvorrichtung (9) horizontal oder im Wesentlichen horizontal ausrichtbar ist.

9. System (20) zum Applizieren einer Türdichtung (2) an eine Tür (3) eines Kraftfahrzeugs (4),
**dadurch gekennzeichnet,**
**dass** das System (20) eine Vorrichtung (1) nach einem der Ansprüche 1 bis 8 und eine Appliziervorrichtung (18) zum Applizieren der Türdichtung (2) an die Tür (3) aufweist.

10. System (20) nach Anspruch 9,
**dadurch gekennzeichnet,**
**dass** die Appliziervorrichtung (18) derart entlang der Führungsbahn (8) der Führungsvorrichtung (7) geführt ist, dass eine während des Applizierens der Türdichtung (2) vorgegebene relative Lage der Appliziervorrichtung (18) zu einer an der Aufnahmevorrichtung (5) angeordneten Tür (3) durch die Führungsvorrichtung (7) eingestellt wird.

11. System (20) nach Anspruch 9 oder 10,
**dadurch gekennzeichnet,**
**dass** die Vorrichtung (1) eine Detektionsvorrichtung (19) aufweist, die zum Detektieren eines Verlaufs einer an einer Tür (3) angebrachten Türdichtung (2) aufweist.

12. Verfahren zum Applizieren einer Türdichtung (2) an eine Tür (3) eines Kraftfahrzeugs (4) mittels einer Vorrichtung (1) nach wenigstens einem der Ansprüche 1 bis 8, wobei das Verfahren durch folgende Verfahrensschritte gekennzeichnet ist:
- Anordnen einer Tür (3) an eine Aufnahmevorrichtung (5) der Vorrichtung (1),
- Befestigen der Tür (3) an der Aufnahmevorrichtung (5) mittels mindestens eines Halteelements (12) einer Haltevorrichtung (6) der Vorrichtung (1),
- Anordnen eines Anfangs eines Dichtungsstrangs (2a) an einer durch eine Führungsvorrichtung (7) der Vorrichtung (1) vorgegebenen oder zumindest teilweise vorgegebenen Stelle der Tür (3), und
- Applizieren des Dichtungsstrangs (2a) an der Tür (3) entlang einer von der Führungsvorrichtung (7) vorgegebenen Führungsbahn (8), wobei die Aufnahmevorrichtung (5) während des Applizierens um eine Rotationsachse (10) in eine Rotationsrichtung gedreht wird.

13. Verfahren zum Applizieren einer Türdichtung (2) an eine Tür (3) eines Kraftfahrzeugs (4) mittels eines Systems (20) nach wenigstens einem der Ansprüche 9 bis 11, wobei das Verfahren durch folgende Verfahrensschritte gekennzeichnet ist:
- Anordnen einer Tür (3) an eine Aufnahmevorrichtung (5) der Vorrichtung (1),
- Befestigen der Tür (3) an der Aufnahmevorrichtung (5) mittels mindestens eines Halteelements (12) einer Haltevorrichtung (6) der Vorrichtung (1),
- Anordnen eines Anfangs eines Dichtungsstrangs (2a) an einer durch eine Führungsvorrichtung (7) der Vorrichtung (1) vorgegebenen oder zumindest teilweise vorgegebenen Stelle der Tür (3), und
- Applizieren des Dichtungsstrangs (2a) an der Tür (3) mittels der Appliziervorrichtung (18) des Systems (20) entlang einer von der Führungsvorrichtung (7) vorgegebenen Führungsbahn (8), wobei die Aufnahmevorrichtung (5) während des Applizierens um eine Rotationsachse (10) in eine Rotationsrichtung gedreht wird.

## Claims

1. A device (1) for orienting a door seal (2) when the door seal is applied (2) to a door (3) of a motor vehicle (4), having a receiving device (5) for receiving the door (3) in a defined manner, a holding device (6), arranged on the receiving device (5), for holding the door (3), a guide device (7), arranged on the receiving device (5), with a guide track (8) for orienting the door seal (2) relative to the door (3) when the door seal is applied (2) to the door (3), and a rotation device (9) for turning the receiving device (5) about at least one axis of rotation (10),
**characterised in that**
the guide track (8) is designed to provide a lateral stop for the door seal (2).

2. A device (1) according to Claim 1,
**characterised in that**
the receiving device (5) has an orientation device (11) for receiving the door (3) on the receiving device (5) in a defined manner.

3. A device (1) according to Claim 1 or 2,
**characterised in that**
the holding device (6) has at least one holding element (12), the holding element (12) being formed as a gripping element and/or suction element and/or clamping element.

4. A device (1) according to Claim 3,
**characterised in that**
the holding device (6) has a plurality of holding elements (12) and the device (1) has a first actuating device (13), the holding elements (12) being able to be actuated simultaneously by way of the first actuating device (13).

5. A device (1) according to at least one of the preceding claims,
**characterised in that**
the guide device (7) has a plurality of guide segments (14), with guide track segments (15), arranged next to one another, the guide segments (14) being arranged on the receiving device (5) so as to be able to be oriented relative to each other and/or detachably.

6. A device (1) according to at least one of the preceding claims,
**characterised in that**
the receiving device (5) is formed rigidly.

7. A device (1) according to at least one of the preceding claims,
**characterised in that**
the rotation device (9) has an electric motor (16) which can be actuated by way of a second actuating device (17), the second actuating device (17) being designed for foot actuation.

8. A device (1) according to at least one of the preceding claims,
**characterised in that**
the axis of rotation (10) of the rotation device (9) can be oriented horizontally or substantially horizontally.

9. A system (20) for applying a door seal (2) to a door (3) of a motor vehicle (4),
**characterised in that**
the system (20) has a device (1) according to one of Claims 1 to 8 and an application device (18) for applying the door seal (2) to the door (3).

10. A system (20) according to Claim 9,
**characterised in that**
the application device (18) is guided along the guide track (8) of the guide device (7) in such a way that a relative position of the application device (18) relative to a door (3) arranged on the receiving device (5), which is specified during the application of the door seal (2), is set by the guide device (7).

11. A system (20) according to Claim 9 or Claim 10,
**characterised in that**
the device (1) has a detection device (19) which has for detecting a course of a door seal (2) applied to a door (3).

12. A method for applying a door seal (2) to a door (3) of a motor vehicle (4) by means of a device (1) according to at least one of Claims 1 to 8, wherein the method is **characterised by** the following method steps:
- arranging a door (3) on a receiving device (5) of the device (1),
- fastening the door (3) to the receiving device (5) by means of at least one holding element (12) of a holding device (6) of the device (1),
- arranging a start of a seal strand (2a) on a point of the door (3) specified or at least partially specified by a guide device (7) of the device (1), and
- applying the seal strand (2a) to the door (3) along a guide track (8) specified by the guide device (7), the receiving device (5) during the application being turned in a direction of rotation about an axis of rotation (10).

13. A method for applying a door seal (2) to a door (3) of a motor vehicle (4) by means of a system (20) according to at least one of Claims 9 to 11, wherein the method is **characterised by** the following method steps:
- arranging a door (3) on a receiving device (5) of the device (1),
- fastening the door (3) to the receiving device (5) by means of at least one holding element (12) of a holding device (6) of the device (1),
- arranging a start of a seal strand (2a) on a point of the door (3) specified or at least partially specified by a guide device (7) of the device (1), and
- applying the seal strand (2a) to the door (3) by means of the application device (18) of the system (20) along a guide track (8) specified by the guide device (7), the receiving device (5) during the application being turned in a direction of rotation about an axis of rotation (10).

## Revendications

1. Dispositif (1) permettant d'orienter une garniture d'étanchéité de porte (2) lors de l'application de cette garniture d'étanchéité de porte (2) sur une porte (3) d'un véhicule automobile (4) comprenant un dispositif de réception (5) permettant une réception définie de la porte (3), un dispositif de retenue (6) monté sur le dispositif de réception (5) permettant de retenir la porte (3), un dispositif de guidage (7) monté sur le dispositif de réception (5) comprenant une piste de guidage (8) permettant d'orienter la garniture d'étanchéité de porte (2) par rapport à la porte (3) lors de l'application de la garniture d'étanchéité de porte (2) sur la porte (3) et un dispositif de rotation (9) permettant de faire tourner le dispositif de réception (5) autour d'au moins un axe de rotation (10), **caractérisé en ce que**
la piste de guidage (8) est réalisée pour permettre de disposer d'une butée latérale pour la garniture d'étanchéité de porte (2).

2. Dispositif (1) conforme à la revendication 1,
**caractérisé en ce que**
le dispositif de réception (5) comporte un dispositif d'orientation (11) permettant une réception définie de la porte (3) sur ce dispositif de réception (5).

3. Dispositif (1) conforme à la revendication 1 ou 2,
**caractérisé en ce que**
le dispositif de retenue (6) comporte au moins un élément de retenue (12), l'élément de retenue (12) étant réalisé sous la forme d'un élément de préhension et/ou d'un élément d'aspiration et/ou d'un élément de serrage.

4. Dispositif (1) conforme à la revendication 3,
**caractérisé en ce que**
le dispositif de retenue (6) comporte plusieurs éléments de retenue (12) et le dispositif (1) comporte un premier dispositif d'actionnement (13), les éléments de retenue (12) pouvant être fixés simultanément par le premier dispositif d'actionnement (13).

5. Dispositif (1) conforme à au moins l'une des revendications précédentes,
**caractérisé en ce que**
le dispositif de guidage (7) comporte plusieurs éléments de guidage (14) voisins ayant des segments de chemin de guidage (15), les segments de guidage (14) pouvant être orientés les uns par rapport aux autres et/ou étant amovibles sur le dispositif de réception (5).

6. Dispositif (1) conforme à au moins l'une des revendications précédentes,
**caractérisé en ce que**
le dispositif de réception (5) est rigide.

7. Dispositif (1) conforme à au moins l'une des revendications précédentes,
**caractérisé en ce que**
le dispositif de rotation (9), comporte un moteur électrique (16) qui peut être actionné par l'intermédiaire d'un second dispositif d'actionnement (17), le second dispositif d'actionnement (17) étant réalisé pour pouvoir être actionné avec le pied.

8. Dispositif (1) conforme à au moins l'une des revendications précédentes,
**caractérisé en ce que**
l'axe de rotation (10) du dispositif de rotation (9) peut être orienté horizontalement et/ou essentiellement horizontalement.

9. Système (20) permettant d'appliquer une garniture d'étanchéité de porte (2) sur une porte (3) d'un véhicule automobile (4),
**caractérisé en ce qu'**
il comporte un dispositif (1) conforme à l'une des revendications 1 à 8, et un dispositif d'application (18) permettant d'appliquer la garniture d'étanchéité de porte (2) sur la porte (3).

10. Système (20) conforme à la revendication 9,
**caractérisé en ce que**
le dispositif d'application (18) est guidé le long de la piste de guidage (8) du dispositif de guidage (7) de sorte qu'une position relative du dispositif d'application (18) prédéfinie pendant l'application de la garniture d'étanchéité de porte (2) par rapport à une porte (3) montée sur le dispositif de réception (5) soit réglée par le dispositif de guidage (7).

11. Système (20) conforme à la revendication 9 ou 10,
**caractérisé en ce que**
le dispositif (1) comporte un dispositif de détection (19) qui permet de détecter le tracé d'une garniture d'étanchéité de porte (2) installée sur la porte (3).

12. Procédé d'application d'une garniture d'étanchéité de porte (2) sur une porte (3) d'un véhicule automobile (4) au moyen d'un dispositif (1) conforme à au moins l'une des revendications 1 à 8,
**caractérisé en ce qu'**il comporte les étapes suivantes consistant à :
- positionner une porte (3) sur un dispositif de réception (5) du dispositif (1),
- fixer la porte (3) sur le dispositif de réception (5) au moyen d'au moins un élément de retenue (12) d'un dispositif de retenue (6) du dispositif (1),
- positionner le début d'un cordon d'étanchéité (2a) sur un emplacement de la porte (3) prédéfini ou au moins partiellement prédéfini par un dispositif de guidage (7) du dispositif (1), et
- appliquer le cordon d'étanchéité (2a) sur la porte (3) le long d'une piste de guidage (8) prédéfinie par le dispositif de guidage (7), le dispositif de réception (5) étant tourné autour d'un axe de rotation (10) dans un sens de rotation pendant l'application.

13. Procédé d'application d'une garniture d'étanchéité de porte (2) sur une porte (3) d'un véhicule automobile (4) au moyen d'un système (20) conforme à au moins l'une des revendications 9 à 11,
**caractérisé par**
les étapes suivantes consistant à :
- positionner une porte (3) sur un dispositif de réception (5) du dispositif (1),
- fixer la porte (3) sur le dispositif de réception (5) au moyen d'au moins un élément de retenue (12) d'un dispositif de retenue (6) du dispositif (1),
- positionner le début d'un cordon d'étanchéité (2a) sur un emplacement de la porte (3) prédéfini ou au moins partiellement prédéfini par un dispositif de guidage (7) du dispositif (1), et
- appliquer le cordon d'étanchéité (2a) sur la porte (3) au moyen du dispositif d'application (18) du système (20) le long d'une piste de guidage (8) prédéfinie par le dispositif de guidage (7), le dispositif de réception (5) étant tourné dans un sens de rotation autour d'un axe de rotation (10) pendant l'application.
